Europäisches Patentamt

**European Patent Office**

Office européen des brevets

(11) Publication number: **0 270 385**
**A2**

# (12) EUROPEAN PATENT APPLICATION

(21) Application number: **87310754.4**

(22) Date of filing: **07.12.87**

(51) Int. Cl.⁴: **H 01 M 2/34**

(30) Priority: **05.12.86 US 938303**

(43) Date of publication of application:
**08.06.88 Bulletin 88/23**

(84) Designated Contracting States:
**BE CH DE FR GB LI**

(71) Applicant: **EVEREADY BATTERY COMPANY, INC.**
**Checkerboard Square**
**St. Louis Missouri 63164 (US)**

(72) Inventor: **Huhndorff, Harry Roland**
**322 Plymouth Drive**
**Bay Village OH. 44140 (US)**

**Myers, John Paul**
**10232 Thrush Avenue**
**Cleveland, OH. 44111 (US)**

(74) Representative: **Tubby, David George**
**MARKS & CLERK 57-60 Lincoln's Inn Fields**
**London WC2A 3LS (GB)**

(54) Cell circuit interrupter.

(57) The invention relates to a cylindrical galvanic cell having a failsafe circuit interrupter for electrically isolating one terminal of the cell from the cell electrochemical system when the bottom of the cylindrical container bulges beyond a predetermined amount. The circuit interrupter is provided by a conductive member secured at the closed end of the cell by non-conductive means, the periphery of the conductive member being linked to the cell by frangible, conductive means, the conductive member being sufficiently rigid that the frangible conductive means will rupture when the end of the cell bulges beyond a predetermined limit.

EP 0 270 385 A2

**Description**

## CELL CIRCUIT INTERRUPTER

The present invention relates to a sealed galvanic cell of the type comprising: a metal container having a conductive cover sealed thereto and having at least a part of the cover insulated therefrom; a positive electrode; a negative electrode, one electrode being in electrical contact with the cover and the other being in electrical contact with the container; an electrolyte; and a circuit interrupter so designed as to interrupt flow of current to or from a circuit external to the cell.

Galvanic cells, such as alkaline cells, are generally designed to vent when the internal pressure exceeds a predetermined amount. This can occur when the cell is exposed to an abuse condition, such as being charged to an excessive degree, and the cell will normally vent to allow the electrolyte to escape. Although it is preferable to have the electrolyte escape rather than have the cell rupture from build up of internal pressure, electrolyte leakage is potentially dangerous to persons and destructive to equipment.

Cell manufacturers have used a number of approaches to resolve the problem of electrolyte leakage. One of the most common methods of preventing seal rupture caused by abusive charging or the like is to insert a diode in the battery's electrical circuit. This eliminates the possibility of charging the cells, so internal gas cannot be generated and the seal never ruptures.

Another electrically related mechanism is a belleville shaped "flip switch"; a mechanism of this type is described in US Patent No. 4,025,696 . This device is triggered by bulging of the cell bottom which causes a disc-shaped washer to invert and thereby to break electrical contact. Prior to activation, the washer's inside diameter is slanted toward the container. As the container bulges, the bottom of the container pushes against the washer and eventually causes the washer to invert. This inversion electrically separates the bottom cover from the container, causing an open circuit.

Another method involves the use of absorbents or electrolyte thickeners. The absorbent materials are usually located outside the seal area and beneath the cell's cover or jacket. As electrolyte escapes from a ruptured seal, the liquid is absorbed. Spew thickeners are mixed with the electrolyte and therefore are contained within the cell. The objective of the thickener is to slow down and/or absorb any leakage that may occur. The disadvantage of using either an absorbent or a thickener is that both materials occupy space that otherwise could be used for active materials of the cell.

Yet another procedure is to use an outer container and end covers as an electrolyte containment system to provide space to contain the electrolyte that escapes.

US Patent 3,676,221 discloses a battery comprising a plurality of stacked, disc-like sealed cells secured together by cups fitted over one cell of each pair and having bottoms spot-welded to the next cell and sidewalls spot-welded to the interfitting cell. A heat-shrunk sheath encloses the battery and has caps forming the poles. Between each pair of cells is a circular disc of insulating material against which the cup bottoms bulge upon expansion of the contents of the cells, thereby breaking the welds and electrically disconnecting the cells.

US Patent No. 3,775,661 describes a cell in which internal pressure forces a diaphragm against a switch which electrically disconnects a charging device. The diaphragm is located inside a venting device which is attached to one end of the cell.

US Patent No. 2,651,669 describes a bulge-activated switch that can be incorporated into a single cell battery or a multiple cell battery and operable so that the bulge can be used to open a switch, or switches, which controls the cell's discharging and/or charging circuits.

US Patent No. 3,617,386 describes a cell in which a thin sheet of metal with "spring back" ability is positioned between the seal and cover of the cell so as to break the cell's electrical circuit when the bulge becomes excessive.

It has now been discovered that deleterious leakage of electrolyte may be prevented by the use of a conductive member, or end cap, secured at one end of a container in the cell by a non-conductive agent but with the conductive. member making electrical contact with that end by means of a frangible, conductive seal designed to rupture when the container bulges to a predetermined degree, thus isolating the cell and preventing any further deleterious charging or discharging.

Thus, the present invention comprises a sealed galvanic cell comprising: a metal container having a closed end and an open end and having a conductive cover sealed over the open end, at least a part of the cover being insulated from the container; a positive electrode; a negative electrode; an electrolyte; and a circuit interrupter, one electrode being in electrical contact with the cover and the other being in electrical contact with the container, characterised in that the circuit interrupter is provided by a conductive member secured at the closed end of the container by non-conductive means, the periphery of the conductive member being linked to the container by frangible, conductive means, the conductive member being sufficiently rigid that the frangible conductive means will rupture when the end of the container bulges beyond a predetermined limit.

Since the periphery of the conductive member is electrically connected to the container, whilst the interior of the conductive member is electrically insulated from the container, except through the periphery, then, provided that the external circuit passes through the conductive member, i.e. it is used as a terminal to connect the cell to the external circuit, breaking of the frangible, conductive means isolates the cell from the external circuit and prevents any further charging or discharging.

Surprisingly, we have found that this will only work if the conductive member is connected to the closed end (or "bottom") of the container; if the conductive member is connected to the cover over the open end of the container, the desired circuit breaking does not occur or does not occur at the appropriate time.

One advantage of the present invention is the provision of a galvanic cell with means for electrically isolating one terminal of the cell from the cell's electrochemical system upon a predetermined bulge in the cell's housing. Another advantage of the invention is that the interruption means need only occupy a minimum amount of space so as not to diminish the space allocated for the active components of the cell. A further advantage of the invention is that the safe galvanic cell provided is easy to make, cost-effective and easy to assemble.

Specifically, the simple design of the circuit interrupter of the present invention is advantageous in that, when a non-conductive adhesive is employed as the securing means securing the closed end of the container to the conductive member, it can be easily applied as a layer between about 0.025 mm (0.001 inch) and 1.27 mm (0.05 inch) thick, preferably between about 0.25 mm (0.01 inch) and about 0.51 mm (0.02 inch) thick. Thus the circuit breaker means will require little or no additional space within the cell since the member can function as a cover for one end of the cell.

The present invention also effectively: eliminates electrolyte leakage due to abusive charging or over-discharging; does not require an additional electrical component; is relatively simple to incorporate into a manufacturing process; and effectively does not take up any useable space within the cell's interior.

In addition, advantages of the present invention may be further enumerated as follows. The circuit interrupter can be incorporated into the cell construction currently used in production without changing the cell's design. It is positive and irreversible such that the electrical connection between the cover and container is kept intact until the moment the weld is broken. This is a particularly desirable feature since many other circuit breaking mechanisms generally pass through an interim phase in which electrical contact is sporadic. This phenomenon could result in "chattering" at the point of contact. The circuit interrupter is inexpensive since there are no costly mechanical parts to purchase. Cell parts currently used in production do not need to be modified since a small amount of a commercially available adhesive is all that need be applied between the bottom of the container and the cover.

The terms "isolated", "insulated" and "conductive", as well as their related terms, are used herein as though the adverb "electrically" were used in conjunction therewith, unless stated otherwise.

The conductive member should preferably be rigid so that, when the central region of the container bottom bulges, the conductive member will not be substantially deformed and will remain essentially flat or planar or in whatever other shape it originally possessed, thereby ensuring that electrical contact with the container will be broken by the rupturing of the seal. Thus, when the container bottom bulges, it will be sufficient to break the frangible, conductive means and force the periphery of the member away from the container, causing it to become electrically insulated from the container.

The insulating securing means of the conductive member is ideally a non-conductive adhesive that secures the inner area of the conductive member to the bottom of the container, although any means known to be adequate in the art may be employed. Suitable non-conductive adhesives for use in accordance with the present invention include methyl methacrylate, ethyl cyanoacrylate, bisphenol A/epichlorohydrin resin and polyamide blends as well as other such adhesives as are known in the art.

The conductive member itself can be any suitable shape to enable electrical contact with the bottom of the container without requiring direct contact with the container. The member may be substantially of the size and shape of the bottom of the container so as to cover that part of the container effectively completely, or it may only cover a relatively small area, provided that it still serves its function as defined. In the latter case, where the member is only small compared with the bottom of the container, it may be desirable to cover any exposed area of the bottom of the container with an insulating cover. This can take the form of a shrink wrap around the cell covering the exposed areas, or may be independently provided.

It will also be appreciated that the conductive member need not conform in its contours with those of the bottom of the container, provided that this has no adverse effect. Thus, the conductive member may be generally round for a square bottom of the container, and vice versa.

With regard to the periphery of the conductive member, this refers generally to the outer regions of the conductive member, preferably the edges. Specifying the periphery is only important insofar as the function of the conductive member is concerned when the bottom of the container bulges. Generally, the bulge will push the central region of the conductive member, so the closer the frangible conductive means is to the centre of the conductive member, the more distortion of the bottom of the container is required to break the seal.

The frangible conductive means may be constructed from any suitable material, such as a conductive adhesive, but ideally comprises at least one welded join, such as one or more spot welds.

The non-conductive adhesive is applied such that the conductive member is bonded to the bottom of the container with sufficient strength to prevent tipping of the conductive member about the bond when the cell bulges. In addition, the non-conductive adhesive must allow direct electrical contact to be made between the bottom of the container and the periphery of the conductive member. To maintain the electrical contact between these members, the peripheral area of the conductive member may be welded to the bottom of the container using one or more welds. Although various pressure contact systems, such as conductive adhesives, can be used in the present invention, the incorporation of at least one weld at the peripheral area of the conductive member is preferable for ensuring electrical contact between the conductive member and the container until the moment the bulge exceeds a predetermined amount which exceeds the weld strength.

In a preferred embodiment, the container is a cylindrical container, the frangible, conductive seal consists of at least one weld, and the conductive member is a disc-shaped member that can also function as a cover over the bottom of the container.

In the preferred embodiment, a non-conductive adhesive secures only a portion of the conductive member/cover to the container. This adhesive performs two functions. First, the adhesive holds the conductive member/cover substantially perpendicular to the cell's longitudinal axis and, second, the adhesive insulates the cover from the container after the seal has broken.

In spite of the simple design of the circuit interrupter of this invention, there are a number of variables that can be altered to make the circuit interrupter perform as desired. In the preferred embodiment, the two controlling characteristics are (1) the quality of the adhesive bond and (2) the strength of the welded contact. Some of the factors which affect the adhesive bond are (1) the amount of adhesive, (2) the diameter of the adhesive pattern as it is applied between the bottom of the container and the conductive member and, (3) the cleanliness of the interface between the bottom of the container and the conductive member. Weld strength is significantly influenced by: (1) the number of welds; (2) the power setting on the welder; and (3) the length of time the welder is activated. Another variable is the jacket material which is used to enclose the cells. While shrink tube jackets can be pushed away from the conducting member's rim area by the edge of the bottom conducting member, the use of metal jackets may affect the conducting member's ability to separate itself from the bottom of the container. In general, the weld strength must be sufficient to hold the conducting member to the bottom of the container until the bulge reaches a predetermined amount. When this predetermined bulge amount is exceeded, the weld must break prior to any seal vent activation. Since a number of variables can be adjusted to compensate for each other, there are a variety of conditions that will produce acceptable results.

In some applications the control of the degree of bulge to break the weld can be critical. From a commercial viewpoint, the weld should not be broken from an amount of bulge that normally would occur when the cell is subject to high temperature storage. Thus the degree of bulge should generally be beyond the normal bulge that may be encountered in high temperature storage but below the degree of bulge that will break the seal and let electrolyte escape. For example, in a standard type alkaline D-size cylindrical cell [57.84 mm (2.277 inch) high and 33.48 mm (1.318 inch) diameter], the bottom of the container can bulge as much as 0.635 mm (0.025 inch) when stored at 71°C for an eight week period and can vent when the bulge exceeds 1.778 mm (0.070 inch). Consequently, for this size and type of cell system, the weld should generally be designed to break when the bulge is between about 0.762 mm (0.30 inch) and about 1.778 mm (0.70 inch).

This invention is ideally suited for alkaline cells employing a $MnO_2$ positive electrode, a zinc negative electrode and an electrolyte solution comprising potassium hydroxide.

The present invention will now be illustrated in more detail with regard to the following specific example and the accompanying drawings, wherein:

Figure 1 is an elevation, partially in cross-section, of an alkaline manganese dioxide zinc cell embodying the circuit interrupter of the present invention;

Figure 2 is an elevation of part of the cell in Figure 1 showing the conductive member lifted on one side from the container; and

Figure 3 is an elevational view of part of the cell in Figure 2 showing the conductive member lifted on its rim away from the container.

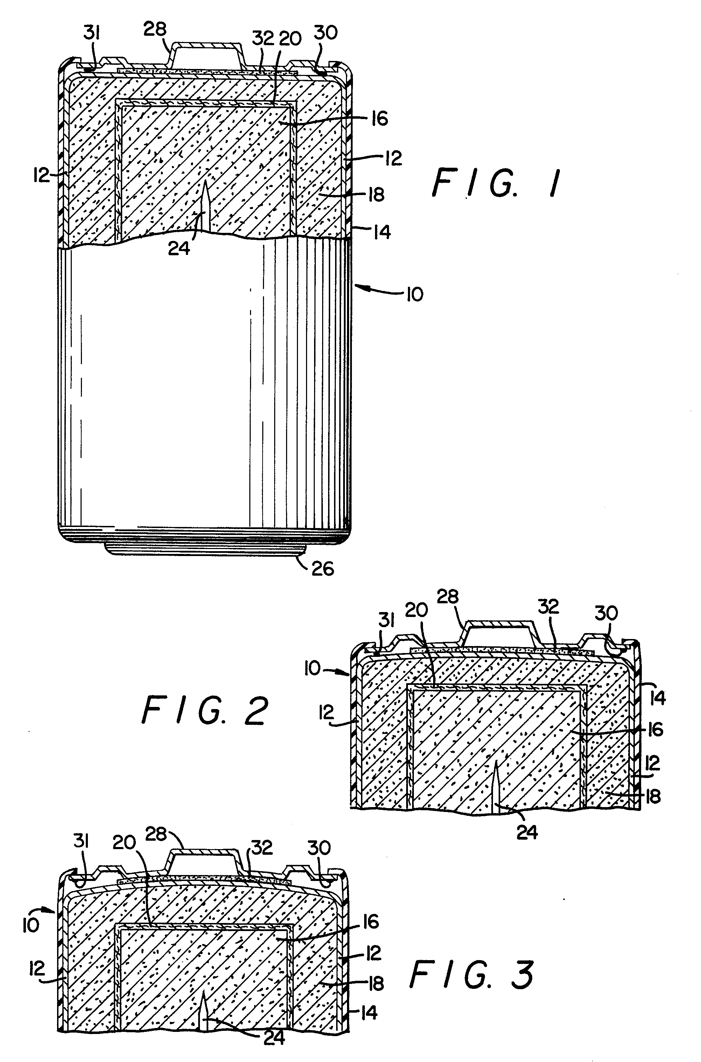

Referring to Figures 1 - 3 inclusive, a typical alkaline galvanic cell 10 of the present invention is shown comprising an inverted metallic cupped container 12 provided with an outer plastic shrink label 14. Disposed within the container 12 are an anode 16, a cathode 18, a separator 20 and an alkaline electrolyte, which permeates the anode 16, cathode 18, and separator 20, respectively. An anode current pin type collector 24 extends lengthwise within the cell 10, parallel to or coincident with the longitudinal axis of the cell, from a location in contact with the anode 16 to the negative end 26 of the cell 10, where it terminates.

A cup-chaped cover (Conductive member) 28 is shown spot welded, e.g. at 30, 31, to the bottom of the container 12. Prior to welding the conductive member 28 to container 12, an electrically non-conductive adhesive 32 is placed between the bottom of the container 12 and conductive member 28 over an area sufficient that only the inner area of conductive member 28 will contact the non-conductive adhesive 32, thereby leaving the peripheral area or rim area of conductive member 28 in electrical contact with container 12. Conductive member 28 is welded (30, 31) to container 12 to assure good electrical contact between these components.

Figure 2 shows the beginning of the bulge in cell 10 so that weld 30 on the right is broken, thereby lifting conductive member 28 away from container 12 at this area. Weld 31 is still functional so that conductive member 28 is still in electrical contact with container 12. This ensures that conductive member 28 will maintain electrical contact with container 12 when a little bulge occurs in the bottom of container 12.

After a predetermined amount of bulge occurs that is calculated to break all the weld (31, 32) connecting the rim of conductive member 28 to container 12, the conductive member 28 lifts away from electrical contact with container 12 as shown in Figure 3. As is evident from Figure 3, conductive member 28 is still secured to container 12 via non-conductive adhesive 32 but its electrical contact is broken, thereby isolating conductive member 28 from the container 12. By calculating the degree of bulge needed to break the welds, this invention can effectively isolate the terminal conductive member 28 from the circuit of the cell prior to the cell venting or rupturing and causing electrolyte to escape.

EXAMPLE

Ninety alkaline manganese dioxide zinc cells were manufactured with a non-conductive adhesive between part of the positive conductive member and the cell bottom as illlustrated in Figure 1. The test cells, which measured approximately 57.84 mm (2.277 inch) high and 33.48 mm (1.318 inch) in diameter, are commonly referred to as D-size cells. The non-conductive adhesive was an epoxy of a 1 : 1 (by weight) mixture of Eccobond 45CL and Eccobond's catalyst number 15CL (Eccobond is a tradename of Emerson and Cumings, Inc., Woburn, MA, USA). The Eccobond 45CL is a bisphenol A/epichlorohydrin resin. Eccobond's catalyst number 15CL is a polyamide blend. Approximately 0.26 g of the two part mixture was applied to the bottom of each cell. The electrically non-conductive adhesive layer was approximately 19.05 mm (0.75 inch) in diameter and 0.254 mm (0.010 inch) to 0.508 mm (0.020 inch) thick. The adhesive was applied in a pattern concentric with the cell's diameter. Next, the positive conductive member was placed on top of the adhesive. Since the conductive member was manufactured in a hat-shaped configuration, as shown in Figure 1, the central portion of the conductive member did not contact the adhesive. Only the bottom interior section of the conductive member touched the adhesive. The outer peripheral part or rim of the conductive member sat directly on the bottom of the cell's container. After the adhesive was applied, the conductive member was spot welded to the container. Three separate welds, approximately 120 degrees apart and 3.175 mm (0.125 inch) in from the conductive member's outer perimeter were produced. A welder, purchased from the Industrial Products Division of Hughes Aircraft Company was used to form the welds. The following settings were used: medium tap; two cycles per weld; 28% heat adjustment and sufficient head pressure. All cells were allowed to sit at room termperature for at least 24 hours before charge testing began. The charge test consisted of a one ampere charge at room temperature until the circuit interrupter opened (welds broke) the cell's circuit or the seal ruptured. Fifty-five of the ninety cells that were tested opened the cell's circuit prior to the seal rupturing. The remaining 35 cells forced the seal to burst before the circuit breakers activated. The success rate of this invention may be increased significantly by determining the optimum weld strength and by selecting the proper adhesive thickness for a particular application.

Claims

1. A sealed galvanic cell comprising: a metal container having a closed end and an open end and having a conductive cover sealed over the open end, at least a part of the cover being insulated from the container; a positive electrode; a negative electrode; an electrolyte; and a circuit interrupter, one electrode being in electrical contact with the cover and the other being in electrical contact with the container, characterised in that the circuit interrupter is provided by a conductive member secured at the closed end of the container by non-conductive means, the periphery of the conductive member being linked to the container by frangible, conductive means, the conductive member being sufficiently rigid that the frangible conductive means will rupture when the end of the container bulges beyond a predetermined limit.

2. A galvanic cell according to claim 1 wherein the non-conductive securing means is a non-conductive adhesive.

3. A galvanic cell according to claim 2 wherein the non-conductive adhesive is a methyl methacrylate adhesive, ethyl cyanoacrylate adhesive, bisphenol A/epichlorohydrin resin or polyamide blend.

4. A galvanic cell according to any of claims 1 to 3 wherein the frangible, conductive means comprises at least one weld.

5. A galvanic cell according to any preceding claim wherein the container is a cylindrical container and the conductive member substantially also provides an external cover over the closed end of the container.

6. A galvanic cell according to any preceding claim wherein the container is in electrical contact with the positive electrode and the cover or part of the cover insulated from the container is in electrical contact with the negative electrode.

7. A galvanic cell according to any of claims 1 to 5 wherein the container is in electrical contact with the negative electrode and the cover or part of the cover insulated from the container is in electrical contact with the positive electrode.

8. A galvanic cell according to any preceding claim wherein the positive electrode is $MnO_2$, the negative electrode is zinc and the electrolyte solution comprises potassium hydroxide.

9. A galvanic cell according to any preceding claim wherein the non-conductive adhesive disposed between the container and the conductive member is a layer of adhesive of thickness from 0.025 mm (0.001 inch) to 1.27 mm (0.05 inch).

10. A galvanic cell according to claim 9 wherein the layer is from 0.25 mm (0.01 inch) to 0.51 mm (0.02 inch) thick.

0270385

F I G. 1

F I G. 2

F I G. 3